(19) Europäisches Patentamt
European Patent Office
Office européen des brevets

(11) **EP 2 647 121 B1**

(12) **EUROPÄISCHE PATENTSCHRIFT**

(45) Veröffentlichungstag und Bekanntmachung des Hinweises auf die Patenterteilung:
**09.01.2019   Patentblatt 2019/02**

(21) Anmeldenummer: **11817515.7**

(22) Anmeldetag: **23.11.2011**

(51) Int Cl.:
**H02P 6/18** *(2016.01)*

(86) Internationale Anmeldenummer:
**PCT/DE2011/075284**

(87) Internationale Veröffentlichungsnummer:
**WO 2012/097783 (26.07.2012 Gazette 2012/30)**

(54) **VERFAHREN ZUR BESTIMMUNG DER POSITION DES LÄUFERS EINER ELEKTRISCHEN MASCHINE**

PROCESS FOR DETERMINING THE POSITION OF THE ROTOR OF AN ELECTRIC MACHINE

PROCÉDÉ DE DÉTERMINATION DE LA POSITION DU ROTOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2010   DE 102010053468**

(43) Veröffentlichungstag der Anmeldung:
**09.10.2013   Patentblatt 2013/41**

(73) Patentinhaber: **Strothmann, Rolf
66740 Saarlouis (DE)**

(72) Erfinder: **Strothmann, Rolf
66740 Saarlouis (DE)**

(74) Vertreter: **Bernhardt, Reinhold
Patentanwälte Bernhardt/Wolff
Partnerschaft mbB
Europaallee 17
66113 Saarbrücken (DE)**

(56) Entgegenhaltungen:
**US-A1- 2005 216 225**

EP 2 647 121 B1

**Beschreibung**

Die Erfindung betrifft ein Verfahren zur Bestimmung der Position des Läufers, insbesondere Drehposition des Rotors, einer elektrischen Maschine in Bezug auf den Stator, nach einer ersten Messmethode ein erster Messwert ($\alpha_1$) der Position ermittelt wird, nach wenigstens einer weiteren Messmethode gleichzeitig ein weiterer Messwert ($\alpha_2$) ermittelt und aus den Messwerten ($\alpha_1,\alpha_2$) ein gemittelter Wert (a) der Position des Läufers bestimmt wird, die Ermittlung der Messwerte ($\alpha_1,\alpha_2$) der Position des Läufers nach der ersten oder/und wenigstens einen weiteren Methode ohne Positionssensor anhand von Messsignalen erfolgt, die an den Phasensträngen der elektrischen Maschine abgegriffen werden und wobei der Wert (a) unter Einbeziehung unterschiedliche Streuungen der Messwerte ($\alpha_1,\alpha_2$) berücksichtigender Gewichtsfaktoren bestimmt wird,

Neben der Positionsermittlung durch Sensoren, insbesondere Hall-Sensoren, sind verschiedene Methoden zur Bestimmung der Position des Läufers elektrischer Maschinen bekannt, die auf unterschiedlichen, mit der Bewegung des Läufers verbundenen physikalischen Vorgängen beruhen.
Abhängig von der Position des Läufers ändert sich z.B. der Magnetisierungsgrad der Polwicklungskerne. Ferner ändert sich die in den Polwicklungen induzierte Gegenspannung. Beide Effekte lassen sich zur Bestimmung der Läuferposition nutzen.

Aus der US 2005/021 6225 A1 geht ein Verfahren der eingangs erwähnten Art hervor. Eine erste Methode zur Drehwinkelbestimmung beruht auf einer elektrischen Nachbildung eines Resolvers durch Wicklungen des Rotors, eine zweite Methode beruht auf Messungen der in Statorwicklungen induzierten Gegen-EMK. Die Gewichtsfaktoren werden anhand der Drehzahl des Rotors variiert.

Der Erfindung liegt die Aufgabe zugrunde, ein neues Verfahren der eingangs genannten Art zu schaffen, das eine Bestimmung der Position des Läufers mit höherer, insbesondere in einem weiten Bereich unterschiedlicher Betriebszustände der elektrischen Maschine gleichbleibender Genauigkeit zulässt.

Das diese Aufgabe lösende Verfahren nach der Erfindung ist dadurch gekennzeichnet, dass die Gewichtsfaktoren (A,B) abhängig von der Größe der abgegriffenen, für die Messwerte ($\alpha_1,\alpha_2$) maßgeblichen Messsignale variiert werden.

Vorteilhaft lässt sich die Läuferposition aus erfindungsgemäß mehreren, auf unterschiedliche Art und Weise bestimmten Messwerten präziser ermitteln.

Insbesondere wird der genannte Wert (a) vorteilhaft unter Einbeziehung von Gewichtsfaktoren (A,B) bestimmt, welche unterschiedliche Streuungen der Messwerte ($\alpha_1,\alpha_2$) berücksichtigen. Je nach ihrer Streuung werden die Messwerte ($\alpha_1,\alpha_2$) durch einen kleineren oder größeren Gewichtsfaktor (A,B) bewertet.

Es werden variable, von der jeweiligen Größe der Streuung und damit von den Betriebsbedingungen der elektrischen Maschine abhängige Gewichtsfaktoren (A,B) verwendet. So lässt sich der Wert (a) unter verschiedenen Betriebsbedingungen mit gleichbleibender Präzision ermitteln.

In einer bevorzugten Ausführungsform der Erfindung erfolgt die Bildung des gemittelten Wertes (a) derart, dass aus den Messwerten ($\alpha_1,\alpha_2$) Werte einer periodischen Funktion, in die die Messwerte ($\alpha_1,\alpha_2$) als Argument eingesetzt werden, gebildet, die Funktionswerte multipliziert mit den Gewichtsfaktoren (A,B) summiert werden und zur Bestimmung des Wertes (a) die gewichtete Summe dann als Argument in die Umkehrfunktion der periodischen Funktion eingesetzt wird. Vorteilhaft wirken sich bei diesem Mittelungsverfahren Unstetigkeiten der Messwerte ($\alpha_1,\alpha_2$) nicht nachteilig aus.

In weiterer Ausgestaltung der Erfindung werden die Gewichtsfaktoren (A,B) abhängig von der Größe für die Messwerte ($\alpha_1,\alpha_2$) maßgeblicher Messsignale variiert. Je größer die Messsignale sind, um so geringer ist die Streuung der Messwerte.

Insbesondere werden Messsignale, die auf variierenden Magnetisierungsgraden von Polwicklungskernen beruhen, am Sternpunkt im Stern verschalteter Phasenstränge abgegriffen.

In den oben genannten Ausführungsformen können die Gewichtsfaktoren (A,B) z.B. abhängig von der Höhe von Potentialänderungen (C) am Sternpunkt und von der Höhe der Drehzahl (D) des Rotors variiert werden.

Die Erfindung wird nachfolgend anhand von Ausführungsbeispielen und der beiliegenden, sich auf eines dieser Ausführungsbeispiele beziehenden Zeichnungen weiter erläutert. Es zeigen:

Fig. 1   eine schematische Darstellung einer elektrischen Maschine mit einer Vorrichtung nach der Erfindung für die Bestimmung der Rotordrehposition,

Fig. 2   die in Fig. 1 gezeigte elektrische Maschine in einer schematischen Querschnittsdarstellung,

Fig. 3   die Querschnittsdarstellung der elektrischen Maschine von Fig. 2 mit um einen Winkel $\alpha$ verdrehtem Rotor, und

Fig. 4   eine erfindungsgemäße Einrichtung zur Bildung eines gewichteten Mittels aus zwei Messwerten ($\alpha_1,\alpha_2$) der Rotordrehposition.

Eine elektrische Maschine umfasst drei im Stern verschalteten Phasenstränge 1,2,3 mit je einer einen Eisenkern 4 aufweisenden Polwicklung 5 an einem Stator 6. Ein als Außenläufer ausgebildeter Rotor 7 umfasst Permanentmagnete 8 und 9, die in dem gezeigten Ausführungsbeispiel eine einzige magnetische Periode mit einem Nord- und einem Südpol bilden.

Bei einem anderen Ausführungsbeispiel könnte die elektrischen Maschine in allen genannten Merkmalen von der vorangehend beschriebenen elektrischen Maschine abweichen. Die Zahl der Phasenströme könnte < oder > als 3 sein und insbesondere könnte jeder Phasenstrang mehr als nur eine Polwicklung aufweisen. Die Polwicklungen könnten am Rotor, insbesondere einem Innenläufer, gebildet sein. Als Feldmagnete kommen nicht nur Permanentmagnete sondern auch Elektromagnete in Betracht. Anstelle der gezeigten Verschaltung der Phasenstränge 1,2,3 im Stern wäre alternativ oder zusätzlich eine Dreieckschaltung möglich.

Eine Bestromungsschaltung 10 legt die Gleichspannung einer Batterie 11 entsprechend dem Pulsweitenmodulationsverfahren (PWM-Verfahren) impulsweise zyklisch an die Phasenstränge 1,2,3 an.

Die Bestromungsschaltung 10 steht in Verbindung mit einer zentralen Steuerschaltung 12, über welche u.a. die Drehzahl und das Drehmoment der elektrischen Maschine steuerbar sind. Die Steuerschaltung 12 ist ferner mit Strommesseinrichtungen 13 bis 15 zur Ermittlung der Ströme in den Phasensträngen 1,2,3 verbunden. Schließlich empfängt die zentrale Steuerschaltung 12 Signale von Potentialmesseinrichtungen 16 bis 19, welche die Potentiale an den Enden der Phasenstränge 1,2,3 sowie das Potential am Sternpunkt 20 erfassen.

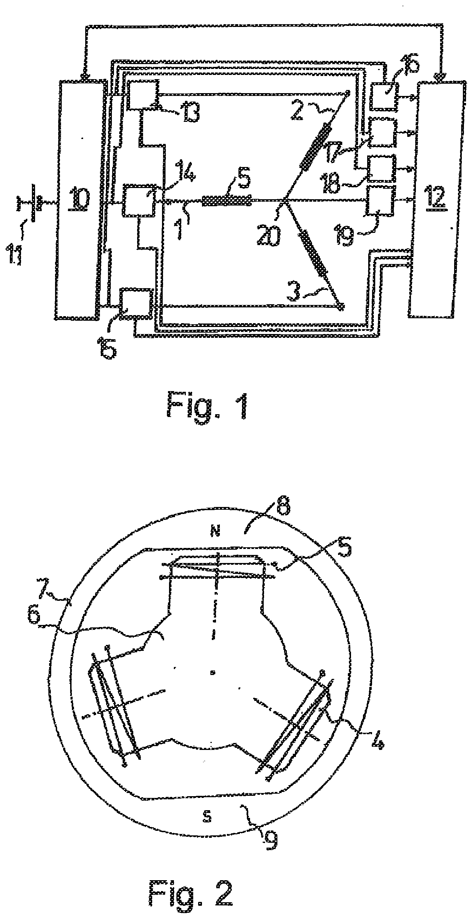

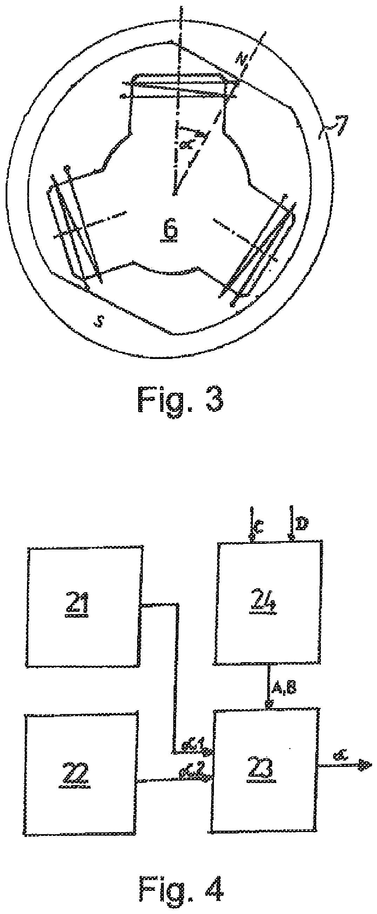

Wie Fig. 2 und 3 erkennen lassen, durchsetzt das Magnetfeld des Rotors 7 je nach dessen Drehstellung in Bezug auf den Stator 6 die Polwicklungen 5 in unterschiedlichem Maße. Entsprechend unterschiedlich sind die Magnetisierungsgrade der Eisenkerne 4. Über eine halbe magnetische Periode besteht jeweils ein eindeutiger funktionaler Zusammenhang zwischen den Magnetisierungsgraden, d.h. der jeweiligen Steigung der Hysteresefunktion, und dem Drehwinkel a. Anhand der positionsabhängigen Magnetisierungsgrade der Polwicklungskerne bzw. anhand der durch die Magnetisierungsgrade bestimmten Induktivitäten der Phasenstränge lässt sich die Drehposition a des Rotors 7 ermitteln, wie dies in der hier einbezogenen DE 10 2006 046 437 A1 beschrieben ist.

Die im Rahmen des PWM-Verfahrens an die Phasenstränge 1,2,3 angelegten Impulse bzw. gesondert angelegte Messimpulse führen aufgrund unterschiedlicher Induktivitäten der Phasenstränge zu charakteristischen Potentialsprüngen am Sternpunkt 20, welche die Spannungsmesseinrichtung 19 erfasst und die Steuerschaltung 12 dann auswertet, ggf. unter Einbeziehung durch die Strommesseinrichtungen 16 bis 19 ermittelter Ströme.

Die Steuerschaltung 12 empfängt zur Auswertung ferner Signale von den Spannungsmesseinrichtungen 16 bis 18. Die Ermittlung und Auswertung aller empfangenen Signale erfolgt laufend innerhalb sehr kurzer Zeitintervalle, in denen sich die Drehposition des Rotors praktisch nicht ändert. Aus laufend auf solche Weise mit Hilfe der Messeinrichtungen 13 bis 19 ermittelten Spannungen und Strömen lassen sich unter Berücksichtigung der angelegten Spannungsimpulse induzierte Gegenspannungen und damit für die Drehposition repräsentative Messsignale berechnen.

Gemäß Fig. 4 umfasst die Steuerschaltung 12 eine erste Auswerteinrichtung 21, die basierend auf den positionsabhängigen Magnetisierungsgraden der Polwicklungskerne 4 einen ersten Messwert $\alpha_1$ der Drehposition des Rotors 7 liefert. Die Steuerschaltung 12 umfasst darüber hinaus eine zweite Auswerteinrichtung 22 zur (annähernd) gleichzeitigen Ermittlung eines zweiten Messwertes $\alpha_2$, der auf den in den Phasensträngen 1,2,3 infolge Drehung des Rotors 7 induzierten Spannungen beruht.

Die Steuerschaltung 12 weist ferner eine die Messwerte $\alpha_1, \alpha_2$ empfangende Mischeinrichtung 23 auf, die mit einer Wichtungseinrichtung 24 in Verbindung steht, welche Gewichtsfaktoren A,B bereitstellt. Die Mischeinrichtung 23 bildet aus den beiden Messwerten $\alpha_1, \alpha_2$ einen unter Einbeziehung der Gewichtsfaktoren A,B gemittelten Wert a. In dem gezeigten Ausführungsbeispiel erfolgt eine Mittelung dadurch, dass der gemittelte Wert a folgende Gleichungen erfüllt:

$$\sin\alpha = A \sin\alpha_1 + B \sin\alpha_2 \qquad (1)$$

$$\cos\alpha = A \cos\alpha_1 + B \cos\alpha_2 \qquad (2).$$

Aus (1) und (2) folgt für den gemittelten Wert a:

$$\alpha = \arctan\left[(A \sin\alpha_1 + B \sin\alpha_2) / (A \cos\alpha_1 + B \cos\alpha_2)\right] \qquad (3).$$

Je nach der Drehzahl D des Rotors 7 und der Amplitude C der genannten Potentialsprünge am Sternpunkt 20 verändert die Wichtungseinrichtung 24 die Gewichtsfaktoren A,B.

Bei großen Amplituden C der Potentialsprünge am Sternpunkt, d.h. großen Unterschieden zwischen den Induktivitäten der Phasenstränge 1,2,3, und bei kleinen Drehzahlen D, d.h. geringen induzierten Spannungen, wird A > B gewählt und damit der nach der ersten Methode ermittelte Messwert $\alpha_1$ betont. Mit wachsender Drehzahl D wird der Gewichtsfaktor B dementsprechend vergrößert und A verkleinert.

**Patentansprüche**

1. Verfahren zur Bestimmung der Position des Läufers, insbesondere Drehposition des Rotors (7), einer elektrischen Maschine in Bezug auf den Stator (6), wobei nach einer ersten Messmethode ein erster Messwert ($\alpha_1$) der Position ermittelt wird,
nach wenigstens einer weiteren Messmethode gleichzeitig ein weiterer Messwert ($\alpha_2$) ermittelt und aus den Messwerten ($\alpha_1,\alpha_2$) ein gemittelter Wert (a) der Position des Läufers bestimmt wird,
die Ermittlung der Messwerte ($\alpha_1,\alpha_2$) der Position des Läufers nach der ersten oder/und wenigstens einen weiteren Methode ohne Positionssensor anhand von Messsignalen erfolgt, die an den Phasensträngen (1,2,3) der elektrischen Maschine abgegriffen werden und wobei der Wert (a) unter Einbeziehung unterschiedliche Streuungen der Messwerte ($\alpha_1,\alpha_2$) berücksichtigender Gewichtsfaktoren (A,B) bestimmt wird, **dadurch gekennzeichnet,**
**dass** die Gewichtsfaktoren (A,B) abhängig von der Größe der abgegriffenen, für die Messwerte ($\alpha_1,\alpha_2$) maßgeblichen Messsignale variiert werden.

2. Verfahren nach Anspruch 1,
**dadurch gekennzeichnet,**
**dass** aus den Messwerten ($\alpha_1,\alpha_2$) als Argument Werte einer periodischen Funktion gebildet werden, die Funktionswerte multipliziert mit den Gewichtsfaktoren (A,B) summiert werden und zur Bestimmung des Wertes (a) aus der gewichteten Summe als Argument der Wert der Umkehrfunktion der periodischen Funktion gebildet wird.

3. Verfahren nach Anspruch 2,
**dadurch gekennzeichnet,**
**dass** der Wert (a) auf folgende Weise bestimmt wird:

$$A \sin\alpha_1 + B \sin\alpha_2 = \sin\alpha,$$

$$A \cos\alpha_1 + B \cos\alpha_2 = \cos\alpha,$$

$$\tan\alpha = (A \sin\alpha_1 + B \sin\alpha_2) / (A \cos\alpha_1 + B \cos\alpha_2),$$

$$\alpha = \arctan [(A \sin\alpha_1 + B \sin\alpha_2) / (A \cos\alpha_1 + B \cos\alpha_2)].$$

4. Verfahren nach einem der Ansprüche 1 bis 3,
**dadurch gekennzeichnet,**
**dass** die nach der wenigstens einen weiteren oder ersten Methode abgegriffenen Messsignale auf abhängig von der Position des Läufers variierenden Magnetisierungsgraden von Polwicklungskernen der Phasenstränge (1,2,3) oder/und auf in Polwicklungen (5) induzierten Gegenspannungen beruhen.

5. Verfahren nach einem der Ansprüche 1 bis 4,
**dadurch gekennzeichnet,**
**dass** Messsignale, die auf den variierenden Magnetisierungsgraden von Polwicklungskernen beruhen, am Sternpunkt im Stern verschalteter Phasenstränge (1,2,3) abgegriffen werden.

6. Verfahren nach Anspruch 5
**dadurch gekennzeichnet,**
**dass** die Gewichtsfaktoren (A,B) abhängig von der maximalen Höhe von Potentialänderungen (C) am Sternpunkt (20) und von der Höhe der Drehzahl (D) des Rotors (7) variiert werden.

**Claims**

1. Method for determining the position of the rotor, in particular the rotational position of the rotor (7), of an electrical machine in relation to the stator (6), wherein a first measurement value ($\alpha_1$) of the position is established according to a first measurement method,
a further measurement value ($\alpha_2$) is established at the same time according to at least one further measurement method and an averaged value ($\alpha$) of the position of the rotor is determined from the measurement values ($\alpha_1$, $\alpha_2$), the measurement values ($\alpha_1$, $\alpha_2$) of the position of the rotor according to the first and/or at least one further method are established without a position sensor on the basis of measurement signals that are tapped at the phase windings (1, 2, 3) of the electrical machine and wherein the value ($\alpha$) is determined taking account of different variations of weighting factors (A, B) that take account of the measurement values ($\alpha_1$, $\alpha_2$),
**characterized**
**in that** the weighting factors (A, B) are varied depending on the size of the tapped measurement signals that are decisive for the measurement values ($\alpha_1$, $\alpha_2$).

2. Method according to Claim 1,
**characterized**
**in that** values of a periodic function are formed from the measurement values ($\alpha_1$, $\alpha_2$) as the argument, the function values multiplied by the weighting factors (A, B) are summed and, for the purposes of determining the value ($\alpha$) from the weighted sum as an argument, the value of the inverse function of the periodic function is formed.

3. Method according to Claim 2,
**characterized**
**in that** the value ($\alpha$) is determined in the following way:

$$A \sin \alpha_1 + B \sin \alpha_2 = \sin \alpha,$$

$$A \cos \alpha_1 + B \cos \alpha_2 = \cos \alpha,$$

$$\tan \alpha = (A \sin \alpha_1 + B \sin \alpha_2)/(A \cos \alpha_1 + B \cos \alpha_2)$$

$$\alpha = \arctan[(A \sin \alpha_1 + B \sin \alpha_2)/(A \cos \alpha_1 + B \cos \alpha_2)].$$

4. Method according to any one of Claims 1 to 3, **characterized**
**in that** the measurement signals tapped according to the at least one further or first method are based on varying degrees of magnetization of pole winding cores of the phase windings (1, 2, 3), which depend on the position of the rotor, and/or on negative fields induced in pole windings (5).

5. Method according to any one of Claims 1 to 4, **characterized**
**in that** measurement signals which are based on the varying degrees of magnetization of pole winding cores are tapped at the neutral point in star-connected phase windings (1, 2, 3).

6. Method according to Claim 5,
**characterized**
**in that** the weighting factors (A, B) are varied depending on the maximum level of potential changes (C) at the neutral point (20) and on the level of the rotational speed (D) of the rotor (7).

**Revendications**

1. Procédé de détermination de la position d'une pièce mobile, en particulier de la position de rotation du rotor (7) d'une machine électrique, par rapport au stator (6),
dans lequel

une première valeur de mesure ($\alpha_1$) de la position est déterminée par une première méthode de mesure, simultanément une autre valeur de mesure ($\alpha_2$) est déterminée par au moins une autre méthode de mesure, et une valeur moyennée ($\alpha$) de la position de la pièce mobile est définie à partir des valeurs de mesure ($\alpha_1$, $\alpha_2$), la détermination des valeurs de mesure ($\alpha_1$, $\alpha_2$) de la position de la pièce mobile par la première et/ou par au moins une autre méthode s'effectue sans capteur de position à l'aide de signaux de mesure qui sont palpés sur des brins de phase (1, 2, 3) de la machine électrique, et la valeur (a) est définie en ayant recours à des facteurs de pondération (A, B) qui prennent en compte différentes dispersions des valeurs de mesure ($\alpha_1$, $\alpha_2$),
**caractérisé en ce que**
les facteurs de pondération (A, B) sont variés en fonction de la taille des signaux de mesure palpés décisifs pour les valeurs de mesure ($\alpha_1$, $\alpha_2$).

2. Procédé selon la revendication 1,
**caractérisé en ce que**
en tant qu'argument, des valeurs d'une fonction périodique sont formées à partir des valeurs de mesure ($\alpha_1$, $\alpha_2$), les valeurs de fonction multipliées par les facteurs de pondération (A, B) sont sommées, et pour définir la valeur (a), en tant qu'argument, la valeur de la fonction inverse de la fonction périodique est formée à partir de la somme pondérée.

3. Procédé selon la revendication 2,
**caractérisé en ce que**
la valeur (a) est définie de la manière suivante :

$$A \sin\alpha_1 + B \sin\alpha_2 = \sin\alpha,$$

$$A \cos\alpha_1 + B \cos\alpha_2 = \cos\alpha,$$

$$\tan\alpha = (A \sin\alpha_1 + B \sin\alpha_2) / (A \cos\alpha_1 + B \cos\alpha_2),$$

$$\alpha = \arctan [(A \sin\alpha_1 + B \sin\alpha_2) / (A \cos\alpha_1 + B \cos\alpha_2)].$$

4. Procédé selon l'une des revendications 1 à 3,
**caractérisé en ce que**
les signaux de mesure palpés par ladite au moins une autre méthode ou par la première méthode sont basés sur des degrés de magnétisation de noyaux d'enroulements polaires des brins de phase (1, 2, 3), qui varient en fonction de la position de la pièce mobile, et/ou sur des contre-tensions induites dans des enroulements polaires (5).

5. Procédé selon l'une des revendications 1 à 4,
**caractérisé en ce que**
des signaux de mesure qui sont basés sur des degrés de magnétisation variables de noyaux d'enroulements polaires sont palpés au point neutre dans l'étoile des brins de phase (1, 2, 3) connectés.

6. Procédé selon la revendication 5,
**caractérisé en ce que**
les facteurs de pondération (A, B) sont variés en fonction de la valeur maximale de modifications de potentiel (C) au point neutre (20) et de la valeur de la vitesse de rotation (D) du rotor (7).

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050216225 A1
- DE 102006046437 A1